Europäisches Patentamt

European Patent Office

Office européen des brevets

(19)

(11) Publication number: **0 061 573**
**B1**

(12) **EUROPEAN PATENT SPECIFICATION**

(45) Date of publication of patent specification: **02.01.86**

(51) Int. Cl.⁴: **G 21 D 1/00**, G 21 C 13/00

(21) Application number: **82101112.9**

(22) Date of filing: **16.02.82**

(54) **Nuclear steam supply system and method of installation.**

(30) Priority: **31.03.81 US 249522**

(43) Date of publication of application:
**06.10.82 Bulletin 82/40**

(45) Publication of the grant of the patent:
**02.01.86 Bulletin 86/01**

(84) Designated Contracting States:
**BE DE FR GB IT NL SE**

(56) References cited:
**WO-A-80/00893**
**GB-A- 837 031**
**GB-A-1 429 685**
**US-A-3 752 738**

**NUCLEAR SAFETY, vol.15, no.6, November-
December 1974, Washington D.C. (US), G.
YADIGAROGLU et al.: "Novel siting solutions
for nuclear power plants", pages 651-664**

(73) Proprietor: **WESTINGHOUSE ELECTRIC
CORPORATION**
**Westinghouse Building Gateway Center
Pittsburgh Pennsylvania 15222 (US)**

(72) Inventor: **Tower, Stephen N.**
**4448 Old William Penn Highway
Murrysville Pennsylvania (US)**
Inventor: **Christenson, James A.**
**R.D. No. 3, Box 192
Elizabeth Pennsylvania (US)**
Inventor: **Braun, Howard**
**1277 Bellerock Street
Pittsburgh Pennsylvania (US)**

(74) Representative: **Holzer, Rupprecht, Dipl.-Ing.
Philippine-Welser-Strasse 14
D-8900 Augsburg (DE)**

Courier Press, Leamington Spa, England.

## Description

The present invention relates to a prefabricated nuclear steam supply system unit and a method of installation.

Advantages would appear to result in the provision of a nuclear steam supply system that can be of standardized construction, prefabricated, inspected and tested substantially at the factory site, and transported as a unit to different intra-continental use sites.

From GB—A—1 429 685, it is already known that the nuclear reactor of a nuclear power station may be contained within a floatable hull so that the nuclear reactor is able to be water-born and may be towed along navigable waterways to a selected use site and floated into its operating position within a reactor building erected at said use site. The necessary pipe work for the heat exchange fluid used to extract thermal energy from the reactor when in use may also be provided within the hull and connections may then be made directly with respective pipe work of the building.

Furthermore, in "Nuclear Safety", Vol. 15, No. 6, November-December 1974, offshore nuclear power plant concepts are suggested according to which a complete integrated nuclear power generating station is contained in a floating unit which is assembled and functionally tested at the production plant and then towed to an offshore installation site.

In view of the advantages of prefabrication mentioned above, it would also be desirable to use a floating unit concept for providing a complete nuclear steam supply system including a nuclear reactor, steam generators and associated equipment as a prefabricated, inspected and tested unit which may then be floated along commercially navigable waterways such as rivers to a selected use site. However, such a concept would involve severe problems of transportation along available waterways due to the large dimensions of such a complete unit.

It is therefore the principal object of the present invention to provide a nuclear steam supply system and a method of installation permitting manufacture of the complete system at a manufacturing site and floating of the complete system via commercially navigable waterways to a selected use site.

With this object in view, the present invention resides in a nuclear steam supply system assembled at a manufacturing site as a unit to be floated along commercially navigable waterways to a selected use site, said system including a nuclear reactor and steam generators and associated operational, safety and auxiliary equipment disposed within a reactor containment constructed as a floatable body, characterized in that said equipment ia arranged essentially along a line so as to maintain the containment narrow and said containment further has an upper removable sction so as to permit reduction of height of said containment for movement of said unit beneath bridges, and that system components comprising at least said reactor and said steam generators except uppermost sections thereof located within said containment are arranged at a height below said upper removable section.

Said containment may be constructed as a barge or flotation base as an integrated portion of the system. The system may be tested for operability and safety at the factory and then towed along navigable coastal or inland waterways, or overseas to foreign locations to a prepared foundation site at its point of use. The overall unit is so constructed and arranged as to permit removal of the top section to permit passage under low bridges and preferably also to permit removal of the side sections to permit passage through narrow locks without requiring disassembly of safety class piping and wiring.

Thus, the basic concept of the present invention resides in the provision of a nuclear steam supply system unit, NSSSU, mounted on integrally formed flotation base so constructed and arranged as to enable such unit to be tested for safety and performance at the factory where it is constructed and thereafter towed while being floated to a pre-constructed foundation at a selected use site overseas or along the coast of the United States, or along a major navigable river or lake accessible from the coastline, such as along the Mississippi, Missouri, Ohio, etc. rivers, or along the coast of the Great Lakes in the United States and North America as accessible by way of the St. Lawrence River. It is intended that the NSSSU be complete with respect to including all of the operational and safety equipment necessary to function as a source of steam supply. In this regard, the NSSSU may include a horizontal generally cylindrical steel containment shell encasing the reactor and the steam generators, with all safety related components, equipment, diesel power supplies, controls and devices incorporated in the unit on the flotation base fore and aft of the shell.

Inclusion of an open-ended radiation and missile shield on a foundation at the use site into which the NSSSU may be installed, enables construction work to proceed simultaneously in the field and at the factory.

The combination of a field-built missile shield and the factory-built steel containment shell provides for double, "pump-back", containment.

Location of the foundation above flood level can be made possible by raising the NSSSU by way of a temporary water lock during installation.

Cellular portions of the flotation base are adapted to be filled with concrete for shielding after arrival at the installation site to allow for shallow-draft flotation during inland waterway transport. Some cells may be cement-filled initially for float-leveling trim.

The invention will become more readily apparent from the following description of a preferred embodiment thereof shown, by way of example only, in the accompanying drawings, in which:

Figs. 1 and 2 are plan and elevation views, respectively, showing schematically in outline a nuclear steam supply system unit, NSSSU, constructed in accord with features of the present invention;

Fig. 3 is an end elevation view of the nuclear steam supply system unit of Figs. 1 and 2;

Fig. 4 is a side elevation view, partly in outline and partly in section, showing details of a nuclear steam supply section, NSSS, of the unit of the preceding figures;

Fig. 5 is a lateral cross-sectional view, partly in outline, of the NSSS of the unit of the present invention;

Fig. 6 is a side-elevational view, substantially in outline showing a control and instrumentation section, C and IS, of the unit of the present invention;

Fig. 7 is a side-elevational view substantially in outline showing a fluid systems, auxiliary and safety power supply section of the unit of the present invention;

Figs. 8 and 9 illustrate use site preparation and installation means for the unit of the present invention;

Figs. 10 and 11 are plan and side elevation views showing schematically in outline a submergible barge for open-ocean transportation of the NSSSU of the present invention; and

Figs. 12 and 13 are plan and side elevation views of a bolt-on ocean-going alternative flotation transporter for the NSSSU of the present invention.

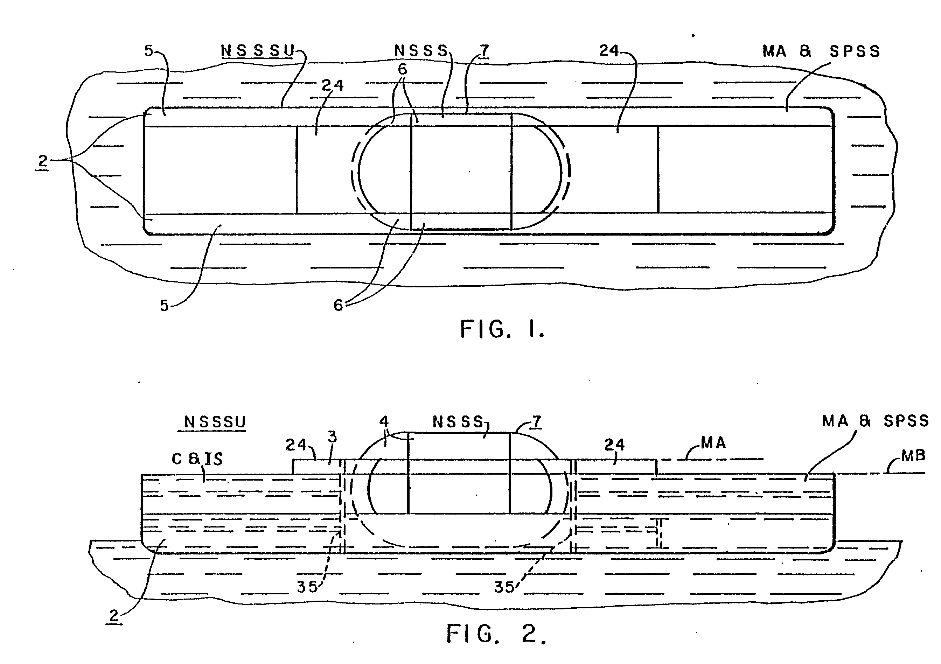

Referring to Figures 1, 2 and 3 the primary salient feature of the NSSSU of the present invention resolves around the construction of the unit such that substantially all of the dynamic functional operational parts of the several longitudinal sections C&IS, NSSS, and the MA&SPSS all lie within a widthwise and heightwise region of the unit capable of passing under navigable bridges along the waterway and into and out of locks along the waterway without requiring any substantial significant disassembly of such functional components as factory-installed within the NSSSU. In this regard the overall height of the unit as originally assembled at the factory is adapted to be altered to suit different bridge heights by removal at the factory and reinstallation at the use site, of the several upper structural housing portions of the unit with no or substantially little disturbance to the functional dynamic operational components of the system disposed within the unit. A NSSSU might have a draft of 2.75 m and an overall height of 32 m for towing along the coastal areas of the United States, for example, and through the lower regions of the Mississippi River up to Cairo, Illinois, for example. If it does continue to proceed along the Missouri or Ohio Rivers the unit can be adapted for passages under lower bridges of these rivers by removal of the upper section 4 of the nuclear steam supply section of the NSSSU, and finally uppermost regions of the Ohio and Missouri Rivers can be traversed by the unit by further removal of still another upper section 3 of the housing portion of the unit. At this point the overall height of the unit may be in the realm of 20 m, for example, with a 2.75 m draft.

To accommodate transit through narrower canal or lock regions, such as along the St. Lawrence Seaway to gain access to the Great Lakes in the North American Continent, the longitudinal side regions 5 of the flotation base 2, together with side regions 6 of a steel containment shell 7 of the NSSS can be removed. In this case the width of the unit may be such as 23 m wide and the overall height can be allowed to be 32 m with the upper sections 3 and 4 intact. In all cases the length of the unit can be about 180 m long and be able to pass through the locks along the aforementioned inland waterways. In the narrower width the flotation base 2 provides less lift and accordingly the water level draft tends to be in the order of 4.5 m rather than the 2.75 m draft of the wider configuration of the flotation base 2.

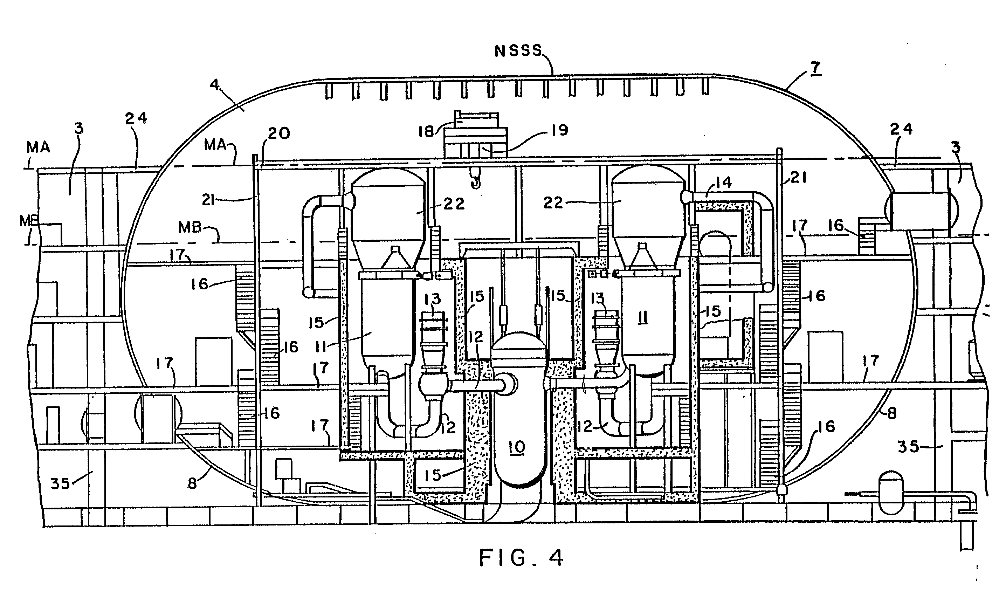

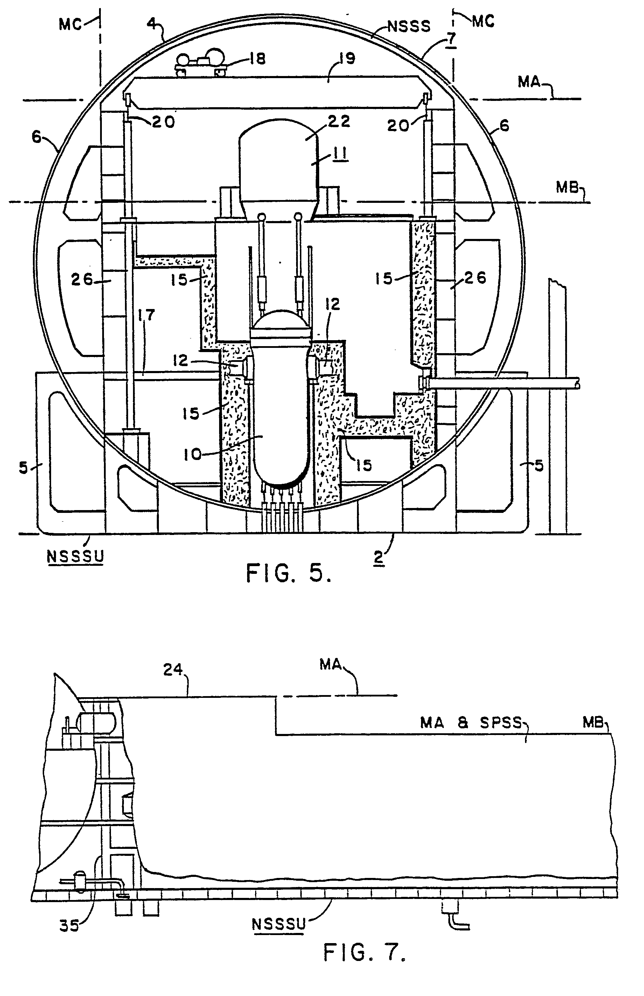

Referring to Figs. 4 and 5, the nuclear steam suply section, NSSS, is integrally mounted on the flotation base 2, which is of hollow steel construction and of flat hull-like configuration having the longitudinal side regions 5 removably attached thereto. The steel containment shell 7 is generally cylindrical with spherical end regions 8. The shell is mounted on the flotation base 2 and attached thereto as by weldments (not shown). Disposed within the shell 7 there is a nuclear reactor vessel 10, a pair of steam generators 11, primary coolant lines 12 for the reactor vessel 10, pumps 13 for circulating the primary coolant through the reactor vessel 10 by way of the lines 12 and into and through the primary side of the steam generators 11. A steam line 14 exits from the secondary side of each of the steam generators 11 for delivery to a steam operated turbine generator assembly (not shown) ultimately to be affiliated with the unit of the present invention. Disposed around the reactor vessel 10 and around the steam generators 11 are a number of hollow steel wall sections 15 that are adapted to be filled with concrete for radiation shielding purposes once the unit is installed at its ultimate use site. A number of stairways 16 vertically interconnect a plurality of horizontal working platforms 17 disposed within the interior of the shell 7 to accommodate working and operating personnel therein. An overhead crane 18 is provided within the shell 7 above the steam generators 11 that is movable along the cross beam 19 that in turn is capable of moving along longitudinal guide rails 20.

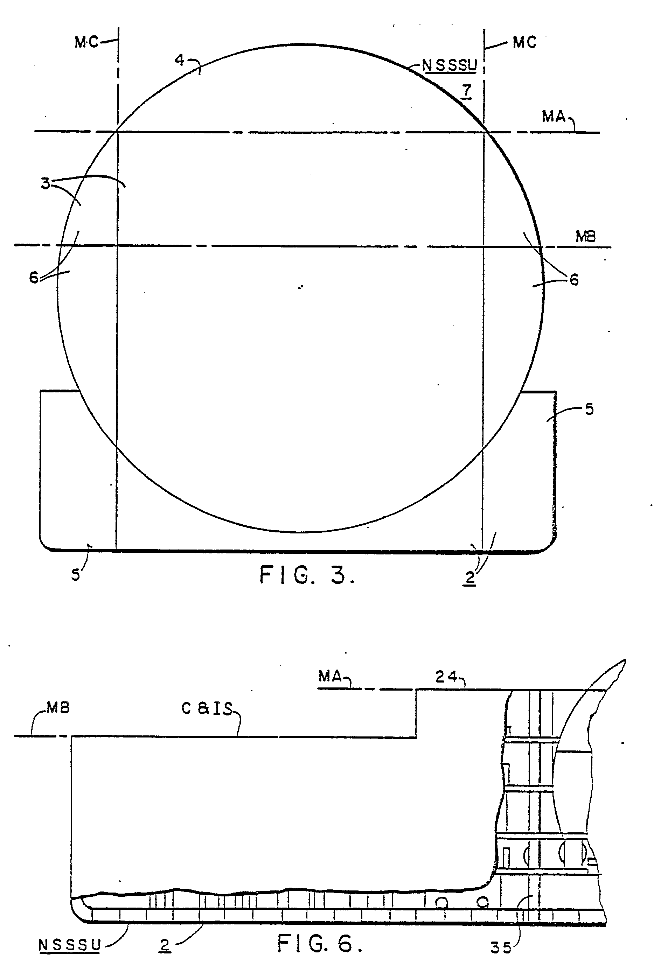

In accord with the primary feature of the invention different height sections are adapted to be removed from the shell 7; the uppermost region having a juncture seam along the horizontal line MA and a second and lower region having a juncture seam along the horizontal line MB, to enable passage of the shell under different height bridges that may exist along the waterways along which the unit is being towed while enroute to a use site. As mentioned hereinbefore, when the uppermost section of the shell 7 is removed, it will be apparent that the crane 18 and cross bridge member 19 also will have to be removed to afford the lowered height for bridge clearance. When the height of the shell is reduced still further to the height designated by the line MB in Figures 4 and 5, upper ends of vertical support columns 21 for the crane cross member 19 and the tracks 20 etc. also additionally will have to be removed, as will an uppermost section 22 of the steam generator. It also will be apparent from Figs. 1, 2, 6 and 7 that an uppermost floor 24 of the sections C&IS and MA&SPSS of the nuclear steam supply system unit, NSSSU, also will need to be removed together with the portions of the shell 7 where the overall height is to be reduced to the level represented by the dot dash line MB in the several figures. Vertical sidewalls 26 are disposed within the interior of the shell 7, Figs. 3 and 5, which act to provide structural integrity and support for the nuclear steam supply components disposed in the nuclear steam supply section, NSSS, in the widthwise region between the removable side regions 6 when such regions are removed to accommodate passage through the narrower canalways and locks. The unit is adapted to have the longitudinal side edges 5 of the flotation base 2 removed together with the side sections 6 of the steel containment shell 7 along the dot-and-dash lines MC.

By making the flotation base 2 together with its vertical walls 26 and all the partitions 15 hollow, a structural rigidity is afforded which is at the same time of sufficiently light weight to enable the nuclear steam plant components to be transported by flotation and ultimately to be filled with cement to provide further rigidity and radiation shielding. Thus, upon installation at the use site, replacement of the previously removed clearance-accommodating components will be reinstalled.

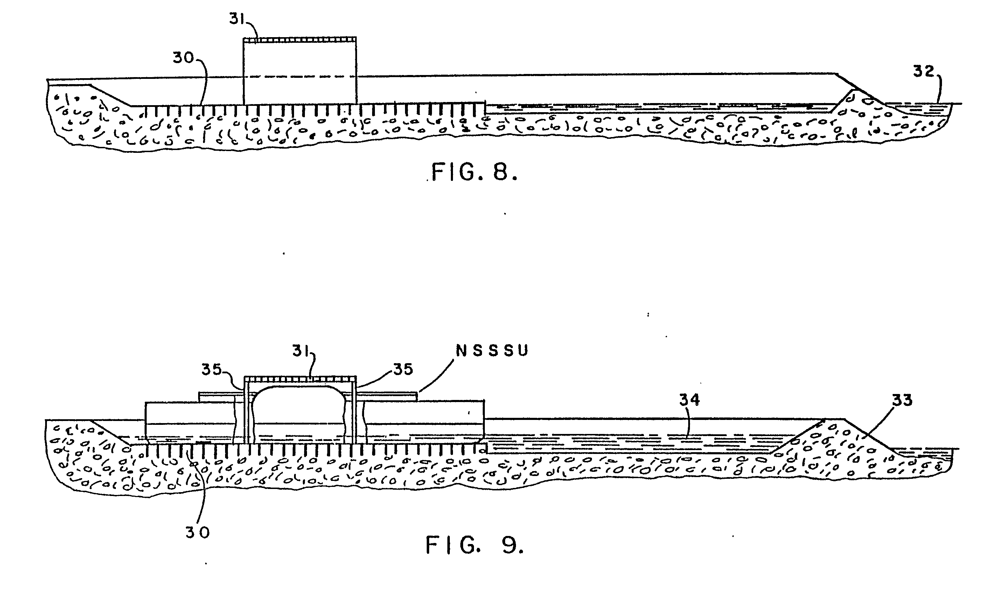

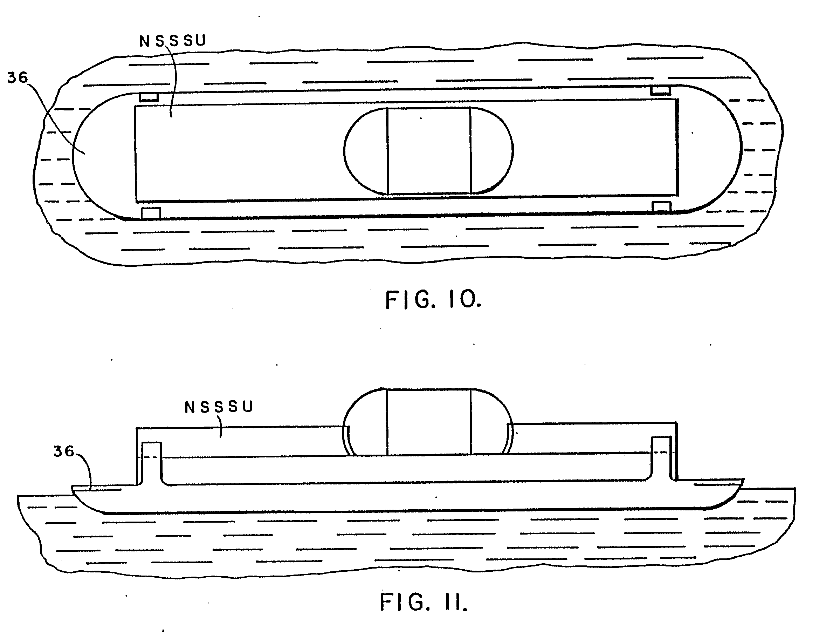

The completed nuclear steam supply system unit NSSSU is towed to its use site location to a pre-constructed foundation, Figs. 8 and 9 on which a hollow radiation shield 31 also will have been constructed. Foundation 30 can be made higher than the water level 32 of the river or coastal body of water along which the use site is located by use of a dike 33. An artificial lake 34 can be constructed to enable the floating of the NSSSU into the shield 31 and onto the foundation 30. The work on preparation of the foundation 30 and the shield 31 together with that of the dike 33 can occur simultaneously with the construction of the nuclear steam supply system unit, NSSSU. Once having been installed at the site, the auxiliary equipment components may be added, including the turbine generator plant (not shown) to be operated by the steam derived from the NSSSU. Such steam turbine generator plant may or may not be prefabricated and of the flotation type, according to the desire and need of the user.

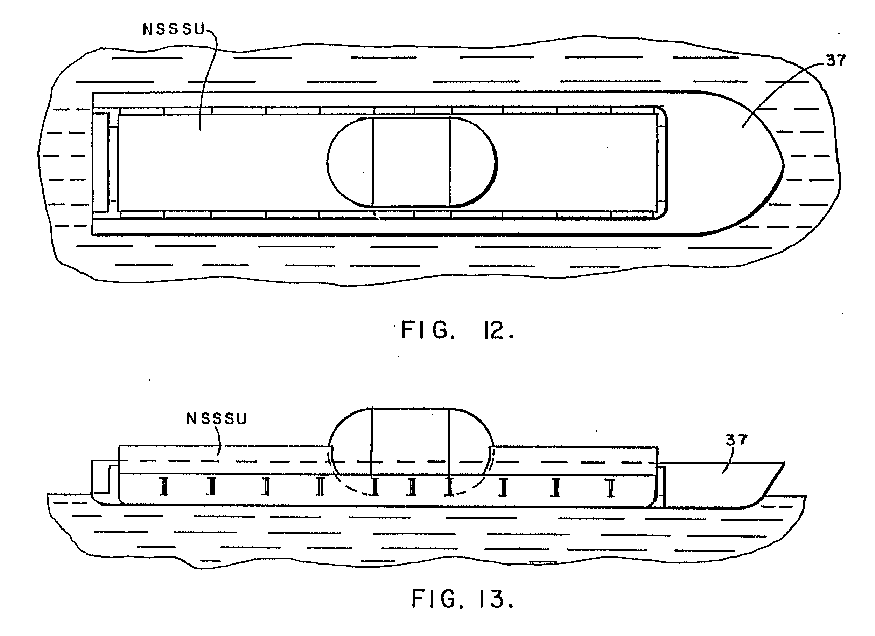

Where transporting the NSSSU over a large distance on the open seas, it may be preferred to employ such as a submergible barge or floating dry dock as exemplified schematically in Figures 10 and 11 to carry such NSSSU. An alternative construction can be to supplement the bouyancy characteristics of the NSSSU by an auxiliary floating hull 37 in which the NSSSU can be fit and secured, as exemplified schematically in Figs. 12 and 13.

## Claims

1. A nuclear steam supply system assembled at a manufacturing site as a unit to be floated along commercially navigable waterways to a selected use site, said system including a nuclear reactor (10) and steam generators (11) and associated operational, safety and auxiliary equipment (12, 13) disposed within a reactor containment (7) constructed as a floatable body, characterized in that said equipment is arranged essentially along a line so as to maintain the containment (7) narrow and said containment (7) further has an upper removable section (4) so as to permit reduction of height of said containment (7) for movement of said unit beneath bridges, and that system components comprising at least said reactor (10) and said steam generators (11) except uppermost sections thereof located within said containment (7) are arranged at a height below said upper removable section (4).

2. A nuclear steam supply system as claimed in claim 1, characterized in that said containment (7) has also removable side regions (6) permitting reduction of the width of said system for movement through narrow locks or waterways, all said system components being located in said containment (7) exclusive of said removable side regions (6).

3. A nuclear steam supply system as claimed in claims 1 or 2, characterized in that said containment (7) is an elongated metal shell with said steam supply system (NSSS) being located in mid section thereof and a control and instrument section (C+IS) being disposed at one end and auxiliary and safety power supply section (SPSS) being disposed at the opposite end thereof.

4. A method of providing a nuclear steam supply system, as claimed in claims 1, 2 or 3, which system is constructed at a manufacturing site adjacent to a navigable waterway as a floatable unit capable of being towed along commercially navigable coastal and inland waterways including through locks thereof with said system components being located within said containment (7) at a height below said removable uppermost heightwise section (4), characterized in that safety inspection of the steam supply system (NSSS) is performed at said manufacturing site and the unit is floated by towing along navigable waterways to a selected use site with said containment top section (4) removed and the unit is then installed at said selected use site

5. A method as claimed in claim 4, characterized in that removable outermost widthwise regions are removed to adapt such unit for flotation through narrower locks along certain waterways to be traversed enroute to an inland waterway use site.

6. A method as claimed in claim 4 or 5, characterized in that the use site is prepared for acceptance of the unit prior to arrival of such unit at such site.

7. A method as claimed in claims 4, 5 or 6, characterized in that flotation assistance is provided to the unit for open-sea transport to the use site.

**Patentansprüche**

1. Nukleares Dampferzeugungssystem, das an einem Herstellungsort zusammengebaut und dann als eine Einheit über kommerziell schiffbare Wasserwege schwimmend zu einer gewählten Einsatzstelle transportiert wird, wobei das System, in einem als schwimmfähiger Körper ausgebildeten Reaktorgebäude (7) untergebracht, einen Kernreaktor (10) und Dampferzeuger (11) sowie die zugehörige Betriebs-, Sicherheits- und Hilfsausrüstung (12, 13) aufweist, dadurch gekennzeichnet, daß die Ausrüstung im wesentlichen linienartig angeordnet ist, um das Gebäude (7) schmal zu halten, und daß das Gebäude (7) außerdem einen abnehmbaren oberen Teil (4) aufweist, um die Höhe des Gebäudes (7) zum Transport der Einheit unter Brücken hindurch zu verringern, und daß in dem Gebäude (7) befindliche, mindestens den Reaktor (10) und die Dampferzeuger (11) mit Ausnahme deren oberster Abschnitte umfassende Systemkomponenten in einer unterhalb des abnehmbaren oberen Teils (4) befindlichen Höhenlage angeordnet sind.

2. Nukleares Dampferzeugungssystem nach Anspruch 1, dadurch gekennzeichnet, daß das Gebäude (7) außerdem abnehmbare Seitenteile (6) aufweist, die eine Verringerung der Breite des Systems zum Transport durch schmale Schleusen oder Wasserwege hindurch zu ermöglichen, und daß alle Systemkomponenten außerhalb der abnehmbaren Seitenteile (6) in dem Gebäuse (7) angeordnet sind.

3. Nukleares Dampferzeugungssystem nach Anspruch 1 oder 2, dadurch gekennzeichnet, daß das Gebäude (7) als langgestreckte Metallhülle ausgebildet ist, wobei das Dampferzeugungssystem (NSSS) in deren Mittelabschnitt und ein Steuer- und Instrumentenblock (C+IS) am einen Ende und ein Hilfs- und Sicherheitsenergieversorgungsblock (SPSS) am anderen Ende der Metallhülle angeordnet ist.

4. Verfahren zum Estellen eines nuklearen Dampferzeugungssystems nach Anspruch 1, 2 oder 3, das an einem an einem schiffbaren Wasserweg gelegenen Herstellungsort als schwimmfähige Einheit aufgebaut wird, die entlang kommerziell schiffbarer Küsten- und Binnenwasserwege einschließlich darin befindlicher Schleusen geschleppt werden kann, wobei die Systemkomponenten in dem Gebäude (7) in einer unterhalb des abnehmbaren obersten Teil (4) gelegenen Höhenlage angeordnet sind, dadurch gekennzeichnet, daß die Sicherheitsprüfung des Dampfer zeugungssystems (NSSS) am Herstellungsort erfolgt und die Einheit schwimmend über schiffbare Wasserwege zu einem gewählten Einsatzort geschleppt wird, wobei der obere Teil (4) des Gebäudes abgenommen ist, und die Einheit dann an dem gewählten Einsatzort installiert wird.

5. Verfahren nach Anspruch 4, dadurch gekennzeichnet, daß abnehmbare breitenmäßig äußere Teile abgenommen werden, um die Einheit schwimmend durch schmalere Schleusen im Verlauf gewisser, auf dem Weg zu einem binnenländischen Einsatzort zu durchfahrender Wasserwege transportieren zu können.

6. Verfahren nach Anspruch 4 oder 5, dadurch gekennzeichnet, daß der Einsatzort vor dem Eintreffen der Einheit an diesem Einsatzort für die Aufnahme der Einheit vorbereitet wird.

7. Verfahren nach Anspruch 4, 5 oder 6, dadurch gekennzeichnet, daß für einen Transport zum Einsatzort durch die offene See eine Schwimmhilfe für die Einheit vorgeshen wird.

**Revendications**

1. Système de fourniture de vapeur d'origine nucléaire monté sur un chantier de construction sous la forme d'un ensemble remorquable le long de voies commercialement navigables jusqu'à un lieu choisi d'utilisation, ce système comprenant un réacteur nucléaire (10) et des générateurs (11) de vapeur auxquels sont associés des équipements auxiliaires (12, 13) de sécurité et de fonctionnement placés dans une enceinte (7) de confinement du réacteur construite sous la forme d'un corps flottant, ce système étant caractérisé en ce que ces équipements sont disposés sensiblement linéairement afin de conserver une enceinte (7) étroite de confinement qui comporte en outre une partie supérieure amovible (4) de manière à pouvoir réduire la hauteur de cette enceinte (7) lorsque l'ensemble doit passer sous des ponts; et en ce que les éléments du système comprenant au moins le réacteur (10) et les générateurs (11) de vapeur, à l'exception de leurs parties supérieures situées à l'intérieur de l'enceinte (7), sont placés à une hauteur qui est inférieure à cette partie supérieure amovible (4).

2. Système de fourniture de vapeur d'origine nucléaire suivant la revendication 1, caractérisé en ce que cette enceinte (7) comporte également des parties latérales amovibles (6) de manière à pouvoir réduire la largeur du système lorsqu'il doit passer à travers des écluses ou des voies d'eau étroites, tous les éléments de ce système étant situés dans l'enceinte (7), à l'exception des parties latérales amovibles (6).

3. Système de fourniture de vapeur d'origine nucléaire suivant l'une des revendications 1 ou 2, caractérisé en ce que l'enceinte (7) est une enveloppe métallique allongée, le système de fourniture de vapeur d'origine nucléaire (NSSS) étant situé dans la partie intermédiaire de ette enveloppe tandis que la section d'instrumentation et de commande (C+IS) est disposée à l'une de ses extrémités et que la section d'alimentation en énergie de sécurité et en énergie secondaire (SPSS) est disposée à son extrémité opposée.

4. Procédé d'installation d'un système de fourniture de vapeur d'origine nucléaire suivant l'une des revendications 1, 2 ou 3, ce système étant construit sur un chantier de construction contigu à une voie navigable de manière à constituer un ensemble flottant qui peut être remorqué le long de voies d'eau côtières et intérieures, commercialement navigables, y compris à travers des écluses, les éléments du système étant placés à l'intérieur de l'enceinte (7) à une hauteur qui est inférieure à la partie supérieure amovible (4), ce procédé étant caractérisé en ce que le contrôle de sécurité du système de fourniture de vapeur d'origine nucléaire (NSSS) s'effectue sur le chantier de construction, et en ce que l'ensemble est remorqué par flottement le long de voies d'eau navigables jusqu'à un lieu choisi d'utilisation, la partie supérieure (4) de l'enceinte ètant enlevée et l'ensemble est ensuite installé sur ce lieu choisi d'utilisation.

5. Procédé suivant la revendication 4, caracté risé en ce que les parties transversales extérieures amovibles sont déposées pour permettre le passage de l'ensemble à travers des écluses plus étroites de certains voies d'eau qu'il faut suivre pour arriver à un lieu d'utilisation situé sur une voie d'eau intérieure.

6. Procédé suivant l'une des revendications 4 ou 5, caractérisé en ce que le lieu d'utilisation est préparé pour recevoir l'ensemble avant l'arrivée de ce dernier au lieu d'utilisation.

7. Procédé suivant l'une des revendications 4, 5 ou 6, caractérisé en ce qu'une flottabilité supplémentaire est apportée à l'ensemble pour permettre son transport en haute mer jusqu'au lieu d'utilisation.

FIG. I.

FIG. 2.

0 061 573

FIG. 3.

FIG. 6.

FIG. 4

FIG. 5.

FIG. 7.

FIG. 8.

FIG. 9.

FIG. 10.

FIG. 11.

NSSSU

36

NSSSU

37

FIG. 12.

NSSSU

37

FIG. 13.